# EUROPÄISCHE PATENTSCHRIFT

(11) **EP 3 082 119 B1**
(45) Veröffentlichungstag und Bekanntmachung des Hinweises auf die Patenterteilung: **23.11.2022**
(21) Anmeldenummer: 15163770.9
(22) Anmeldetag: 15.04.2015
(51) Int. Cl.: G01S 11/12, G01S 13/86, G01S 13/91, G01S 13/92, G01S 17/86, G01S 17/88, G06V 20/54, G08G 1/04, G08G 1/054

(54) **ABSTANDSMESSUNG VON FAHRZEUGEN**
DISTANCE MEASUREMENT OF VEHICLES
MESURE D'INTERVALLE POUR VÉHICULES

(43) Veröffentlichungstag der Anmeldung: 19.10.2016
(73) Patentinhaber: VITRONIC Dr.-Ing. Stein Bildverarbeitungssysteme GmbH, 65189 Wiesbaden (DE)
(72) Erfinder: Scherer, Frank, 64297 Darmstadt (DE); Schàdlich, Juri, 55127 Mainz (DE)
(74) Vertreter: Neumann Müller Oberwalleney Patentanwälte PartG mbB

(56) Entgegenhaltungen:
- EP-A1- 2 084 689
- EP-A1- 2 306 428
- EP-A2- 0 339 988
- WO-A1-2005/069248
- DE-A1- 2 728 946
- DE-T2- 69 406 568
- DE-T2- 69 406 568
- DE-T2- 69 635 980
- US-A- 5 296 852
- US-A1- 2013 242 104
- US-A1- 2014 159 925

## Beschreibung

Die Erfindung betrifft ein Verfahren zur Bestimmung eines Abstands zwischen einem ersten, sich entlang einer Fahrspur bewegenden Fahrzeug und einem zweiten Fahrzeug, wobei das zweite Fahrzeug dem ersten Fahrzeug auf derselben Fahrspur unmittelbar folgt, wobei mit einem lichtempfindlichen Sensor eine Sequenz aufgenommen wird, wobei die Sequenz mindestens einen Teil des ersten Fahrzeugs und einen Teil des zweiten Fahrzeugs umfasst und wobei die Aufnahme der Sequenz zeitlich synchronisiert wird, sowie eine entsprechende Anordnung zur Bestimmung eines Abstands zwischen einem ersten, sich entlang einer Fahrspur bewegenden Fahrzeug und einem zweiten Fahrzeug.

Aus dem Bereich der Verkehrstechnik sind, beispielsweise um im Straßenverkehr Auffahrunfälle zu vermeiden, neben Geschwindigkeitsmessgeräten auch Messgeräte zur Bestimmung des Abstandes zwischen zwei Fahrzeugen, also des Abstands zwischen dem Heckbereich des vorderen Fahrzeugs und dem Frontbereich des hinteren Fahrzeugs, bekannt. Diese werden dazu eingesetzt, die Einhaltung beispielsweise gesetzliche Vorschriften, wie einen zeitlichen Abstand von mindestens 1,8 Sekunden für PKW und einen minimalen räumlichen Abstand von 50 Meter für LKW, zu überprüfen und gegebenenfalls Verstöße zur weiteren Verfolgung zu dokumentieren. Dazu kann es vorgeschrieben sein, innerhalb eines Streckenabschnitts von beispielsweise 150 bis 300 Meter den Abstand zweier Fahrzeuge zu beobachten, beispielsweise durch Videoaufzeichnung, um zu beweisen, dass ein Verkehrsverstoß in Form eines zu geringen Abstands zum vorderen Fahrzeug vorliegt. In der Verkehrstechnik sind Brückenabstandsmessverfahren bekannt, bei denen Videokameras auf Brücken aufgestellt werden. Die Bilddaten werden dabei mit einem Timecode versehen bzw. die Bilddaten werden mit einer Uhr synchronisiert, um die Fahrzeuge auf einem Streckenabschnitt von beispielsweise 300 Meter beobachten zu können. Zur Abstandsmessung wird eine weitere Kamera hängend installiert und kalibriert, beispielsweise mit Hilfe von Markierungen an oder auf der Fahrbahn. Die Druckschrift GB 2 373 619 A beschreibt ein vergleichbares System. Die Daten jedes Abstandsverstoßes von Fahrzeugen werden nachträglich, in der Regel manuell, ausgewertet. Ein Nachteil der beschriebenen Systeme besteht in dem hohen Aufwand für die Technik einerseits und das Personal andererseits, wegen der manuellen Nachbearbeitung und der aufwändigen Installation und Kalibrierung.

Die Druckschrift US 5 296 852 A offenbart ein Verfahren zum Bestimmen des Abstands zwischen einem ersten und einem zweiten Fahrzeug, die entlang eines Weges fahren, umfassend die Schritte: Erzeugen eines Referenzbildes eines Abschnitts des Weges; Umwandeln des Referenzbildes in ein Referenzarrav von Pixeln; Erzeugen aufeinanderfolgender Bilder des Abschnitts des Wegs; Umwandeln der aufeinanderfolgenden Bilder in aufeinanderfolgende Pixelmatrizen; sukzessives Vergleichen von Pixelintensitätsinformationen, die von jedem der aufeinanderfolgenden Arrays erhalten werden, mit Pixelintensitätsinformationen, die von dem Referenzarrav erhalten werden; Erzeugen von Daten, die das Vorhandensein des ersten Fahrzeugs in dem Abschnitt des Wegs anzeigen, wenn die Differenz der Pixelintensitätsinformationen zwischen einem der aufeinanderfolgenden Felder und dem Referenzfeld einen vorbestimmten Wert überschreitet; Aufzeichnen einer ersten Referenzzeit, wenn bestimmt wird, dass das erste Fahrzeug in dem Abschnitt des Wegs vorhanden ist; Erzeugen von Daten, die das Vorhandensein des zweiten Fahrzeugs in dem Abschnitt des Wegs anzeigen, wenn die Differenz der Pixelintensitätsinformationen zwischen einem zweiten der aufeinanderfolgenden Arrays und dem Referenzarrav den vorbestimmten Wert überschreitet; Aufzeichnen einer zweiten Referenzzeit, wenn bestimmt wird, dass das zweite Fahrzeug in dem Abschnitt des Wegs vorhanden ist; und Berechnen des Intervalls zwischen dem ersten und dem zweiten Fahrzeug aus der Differenz zwischen der ersten und der zweiten Referenzzeit.

Eine Aufgabe der Erfindung besteht darin, ein Verfahren zur Bestimmung eines Abstands von Fahrzeugen im Verkehr vorzuschlagen, dass einen höheren Grad der Automatisierung bei der Datenauswertung erlaubt.

Die Aufgabe wird durch ein Verfahren und eine Vorrichtung nach den nebengeordneten Ansprüchen gelöst. In den Unteransprüchen sind bevorzugte Ausführungsformen und vorteilhafte Weiterbildungen angegeben.

Das erfindungsgemäße Verfahren zur Bestimmung einer Zeitdifferenz zwischen einem ersten, sich entlang einer Fahrspur bewegenden Fahrzeug und einem zweiten Fahrzeug, wobei das zweite Fahrzeug dem ersten Fahrzeug auf der Fahrspur folgt, sieht vor, dass mit einem lichtempfindlichen Sensor eine Sequenz zeitlich synchronisiert aufgenommen wird, wobei die Sequenz mindestens einen Teil des ersten Fahrzeugs und einen Teil des zweiten Fahrzeugs umfasst. Grundsätzlich ist es nach dem erfindungsgemäßen Verfahren denkbar, die Zeitdifferenz zweier Fahrzeuge zu messen, zwischen denen sich ein drittes Fahrzeug entlang der Fahrspur bewegt. Auch ist es denkbar, die Zeitdifferenz zweier Fahrzeuge nach der erfindungsgemäßen Methode zu ermitteln, wenn diese Fahrzeuge auf verschiedenen, nebeneinander verlaufenden Fahrspuren fahren. In der Regel ist jedoch die Zeitdifferenz zweier unmittelbar aufeinander folgender Fahrzeuge auf einer Fahrspur von Interesse für die Verkehrsüberwachung, weshalb sich die weitere Beschreibung ausschließlich auf diesen Fall bezieht, ohne den Erfindungsgedanken dahingehend einzuschränken. Der Begriff Sequenz ist im Sinne der Erfindung als eine Reihenfolge im Sinne einer zeitlich linearen Abfolge zu verstehen. Wenn die Sequenz also mindestens einen Teil des ersten Fahrzeugs und einen Teil des zweiten Fahrzeugs umfasst, beginnt die Aufzeichnung so rechtzeitig, dass das erste Fahrzeug noch zumindest teilweise erfasst wird und endet erst, wenn bereits mindestens ein Teil des folgenden, zweiten Fahrzeugs von der Aufzeichnung erfasst worden ist. Bevorzugt wird die Sequenz so aufgezeichnet, dass mindestens das zweite Fahrzeug vollständig erfasst wird. Besonders bevorzugt wird die Sequenz so aufgezeichnet, dass beide Fahrzeuge vollständig erfasst werden.

Erfindungsgemäß ist vorgesehen, dass eine Kamera als lichtempfindlicher Sensor verwendet wird, um eindimensionale Bildspalten aufzunehmen, wobei die Sequenz aus den Bildspalten gebildet wird und jeder Bildspalte der Sequenz zur Synchronisation der Aufnahme eine Zeit zugeordnet wird. Somit besteht die Sequenz aus einer Abfolge von diskreten Bildspalten. Die Kamera ist während der Aufnahme der Sequenz von Bildspalten unbeweglich auf die zu überwachende Fahrspur, bzw. auf mehrere Fahrspuren gerichtet. Als Kamera im Sinne der Erfindung ist ein Kameratyp zu verstehen, der es ermöglicht, mindestens eine eindimensionale Bildspalte aufzunehmen. Als Beispiel kann die Kamera einen sogenannten Zeilensensor aufweisen, was auch als Zeilenkamera bezeichnet wird. Alternativ kann im Sinne der Erfindung auch ein zweidimensionalen Sensor verwendet werden, der zwar über eine Vielzahl von Spalten verfügt, von denen jedoch zu jedem Zeitpunkt nur eine Bildspalte ausgelesen oder ausgewertet wird. Das Aufzeichnen genau einer Bildspalte ist grundsätzlich bevorzugt vorgesehen. Denkbar ist aber auch die gleichzeitige Aufnahme mehrerer Bildspalten, beispielsweise um Farben erfassen zu können. Dabei wird je Farbe, beispielsweise rot, grün und blau, eine Bildspalte aufgezeichnet, in dem Fall also drei Bildspalten. Als Sensoren für die erfindungsgemäße Kamera kommen somit licht- bzw. strahlungsempfindliche Detektoren, in der Regel Halbleiterdetektoren, in Frage, die aus einem eindimensionalen oder einem zweidimensionalen Feld aus Fotodetektoren oder anderen Detektorelementen bestehen.

Es wird, weiterhin erfindungsgemäß, eine Auswertung der Sequenz von Bildspalten vorgenommen, um ein Heck des ersten Fahrzeugs und eine Front des zweiten Fahrzeugs zu identifizieren. Das Identifizieren im Sinne der Erfindung ist dahingehend zu verstehen, dass das Heck und die Front in der Sequenz der Bildspalten zunächst erkannt werden müssen, was bevorzugt durch eine automatisierte Auswertung der Sequenz durch eine Bilderkennungssoftware erfolgt. Die Auswertung der Sequenz von Bildspalten zur Erkennung des Hecks des ersten Fahrzeugs und der Front des zweiten Fahrzeugs im Sinne der Erfindung ist in der Europäischen Patentanmeldung Nr. 14173551.4, auf die hiermit Bezug genommen wird, beschrieben. Der Begriff Heck ist im Sinne der Erfindung als Synonym für einen in Fahrtrichtung hinteren Abschluss des Fahrzeugs zu verstehen. Der Begriff Front ist im Sinne der Erfindung als Synonym für ein in Fahrtrichtung vorderes Ende des Fahrzeugs zu verstehen. Das Heck und die Front sind somit keine räumlich ausgedehnten Fahrzeugteile, sondern markieren eindimensional das vordere Ende und den Abschluss der Fahrzeuge. Daraus ergibt sich, dass nur genau eine Bildspalte der Sequenz das Heck des ersten Fahrzeugs und nur genau eine andere Bildspalte die Front des zweiten Fahrzeugs zeigt bzw. enthält, sofern zu jedem Zeitpunkt nur eine einzelne Bildspalte aufgezeichnet wird. Bei Aufzeichnung mehrerer Bildspalten zeigen alle gleichzeitig aufgenommenen Bildspalten das Heck oder die Front.

Abschließend ist erfindungsgemäß vorgesehen, eine Zeitdifferenz zwischen einer Position der Bildspalte mit dem Heck des ersten Fahrzeugs und einer Position der Bildspalte mit der Front des zweiten Fahrzeugs innerhalb der Sequenz anhand der zugeordneten Zeiten der Bildspalten der Sequenz ermittelt wird.

Ein Vorteil der Erfindung besteht darin, dass durch die Aufzeichnung von Bildspalten der Sequenz jeder Bildspalte eine Zeit zugeordnet ist und der zeitliche Abstand zwischen der Bildspalte mit dem Heck des ersten Fahrzeugs und der Bildspalte mit der Front des zweiten Fahrzeugs besonders einfach ermittelt werden kann, indem beispielsweise eine Differenz der der Bildspalte mit dem Heck des ersten Fahrzeugs zugeordneten Zeit zu der Bildspalte mit der Front des zweiten Fahrzeugs zugeordneten Zeit errechnet wird. Alternativ besteht auch die Möglichkeit, die Anzahl der Bildspalten zwischen der Position der Bildspalte mit dem Heck des ersten Fahrzeugs und der Position der Bildspalte mit der Front des zweiten Fahrzeugs zu ermitteln und diese durch eine Abtastrate der Kamera zu teilen, um den zeitlichen Abstand der Fahrzeuge zu erhalten.

Zum Zwecke der Auswertung, insbesondere gemäß der Europäischen Patentanmeldung Nr. 14173551.4, wird vorzugsweise ein Abbild, welches mindestens das Heck des ersten Fahrzeugs, die Front des zweiten Fahrzeugs und den zwischen den Fahrzeugen liegenden Abschnitt zeigt, aus den aufeinanderfolgenden Bildspalten der Sequenz zusammengesetzt, wobei die Kamera mit einer vorgegebenen, gegebenenfalls auch mit einer anpassbaren Abtastrate arbeitet. Die Verwendung einer Kamera hat den Vorteil, dass der Abstand von dem aufgenommenen Teil des jeweiligen Fahrzeugs zu der Kamera im Wesentlichen gleich bleibt, so dass weder eine perspektivische Verzerrung in Richtung der aneinander gereihten Aufnahmen, noch eine unterschiedliche Lichtausbeute aufgrund der Entfernung zwischen Fahrzeug und Kamera auftritt. Aus diesem Grund ist es besonders vorteilhaft, eine Kamera für die Anordnung seitlich neben der Fahrspur zu verwenden. Die Position seitlich neben der Fahrspur erlaubt eine besonders effektive Erkennung bestimmter Merkmale des ersten und des zweiten Fahrzeugs in der Sequenz von Bildspalten, wie insbesondere das Heck des ersten Fahrzeugs und die Front des zweiten Fahrzeugs. Darüber hinaus ist aber auch beispielsweise deren Länge, Anzahl der Achsen, charakteristische Form oder seitliche Beschriftung, die zu einer Identifizierung hilfreich sein können, durch eine Auswertung der Sequenz von Bildspalten möglich, insbesondere, wenn diese das vollständige erste Fahrzeug und/oder das vollständige zweite Fahrzeug zeigen. Viele der genannten Merkmale sind aus einer Position oberhalb der Fahrspur nicht erkennbar.

Ein weiterer Vorteil der Erfindung ergibt sich daraus, dass neben dem zeitlichen Abstand zweier Fahrzeuge, der unmittelbar aus der Auswertung der Sequenz von Bildspalten hervorgeht, auch ein räumlicher Abstand allein durch Auswertung der Sequenz ermittelbar ist.

Es ist erfindungsgemäß vorgesehen, dass die Kamera seitlich neben der Fahrspur angeordnet wird. Seitlich neben der Fahrspur ist, im Sinne der Erfindung, dahingehend zu verstehen, dass die Kamera nicht vertikal über der in der Regel im Wesentlichen horizontal verlaufenden Fahrspur angeordnet ist. Dennoch kann die Kamera verständlicherweise neben der Fahrspur in einer bestimmten Höhe über dem Niveau der Fahrspur angeordnet sein. Bei der seitlich neben der Fahrspur angeordneten Kamera ist bevorzugt vorgesehen, diese in einer Höhe von etwa drei bis vier Meter über einem Niveau der Fahrspur bzw. der Fahrspuren anzuordnen. Eine nicht beanspruchte Alternative besteht darin, die Kamera oberhalb der Fahrspur bzw. mehrerer Fahrspuren anzuordnen, beispielsweise an einer Brücke oder Gantry. Die höhere Anordnung hat in beiden Fällen den Vorteil, dass bei einer Mehrzahl von Fahrspuren die Fahrzeuge einer der Fahrspuren zugeordnet werden können. Die Kamera kann dabei etwa im rechten Winkel zu der Fahrspur, also zu einer Fahrtrichtung der Fahrzeuge auf der Fahrspur, ausgerichtet werden. In dem Fall ist die Erkennung des Hecks des ersten Fahrzeugs und der Front des zweiten Fahrzeugs besonders einfach durchzuführen. Alternativ kann die Kamera auch schräg zu der Fahrspur ausgerichtet werden, entweder in Richtung des hinlaufenden Verkehrs, also entgegen der Fahrtrichtung der Fahrzeuge auf der Fahrspur, oder in Richtung des rücklaufenden Verkehrs, also in der Fahrtrichtung der Fahrzeuge auf der Fahrspur. Dabei wird die Kamera gegenüber der zur Fahrspur rechtwinkligen Anordnung um etwa 30 bis 60 Grad gegen die Fahrtrichtung oder in Fahrtrichtung gedreht. Ein Vorteil der schrägen Anordnung der Kamera besteht darin, dass entweder die Front der Fahrzeuge bei hinlaufendem Verkehr oder das Heck der Fahrzeuge bei rücklaufendem Verkehr in der Sequenz von Bildspalten mit aufgezeichnet werden kann, so dass diese Fahrzeugbereiche durch Bildauswertung mit zur Identifikation herangezogen werden können, insbesondere durch Auswertung der an dem Heck oder der Front angeordneten Kennzeichenschilder.

Unter der Ausrichtung der Kamera ist im Sinne der Erfindung nicht die Ausrichtung der mindestens einen eindimensionalen auszuwertenden Spalte des Sensors gemeint, die in der Regel vertikal, also im Wesentlichen rechtwinklig zu einer durch die Fahrspur gebildeten Ebene angeordnet ist.

Gemäß einer bevorzugten Ausführungsform ist vorgesehen, dass bei einem Unterschreiten eines Schwellwerts für die Zeitdifferenz die aufgenommene Sequenz gespeichert wird. Dadurch ist vorteilhaft eine sogenannte automatische Fallgenerierung realisierbar. Aufgenommene Sequenzen von Bildspalten, bei denen der Schwellwert für die Zeitdifferenz nicht unterschritten wird, werden vorzugsweise wieder gelöscht bzw. durch nachfolgende Aufzeichnungen wieder überschrieben.

Ein Aufnehmen der Sequenz von Bildspalten kann bevorzugt durch ein Signal gestartet und nach Ablauf einer vorbestimmten Zeit beendet werden. Dadurch ist es vorteilhaft möglich, eine dauerhafte Aufzeichnung zu vermeiden. Alternativ wird die Sequenz von Bildspalten als Aufnahmeschleife aufgezeichnet und nach Ablauf einer vorbestimmten Zeit gelöscht bzw. durch nachfolgende Aufzeichnungen überschrieben. Gemäß einer weiteren bevorzugten Ausführungsform ist vorgesehen, dass eine unabhängige zweite Abstandsmessung vorgenommen wird. Besonders bevorzugt wird dazu eine Geschwindigkeitsmessvorrichtung, insbesondere ein LiDAR verwendet. Die unabhängige zweite Abstandsmessung kann vorteilhaft dazu verwendet werden, wenn gegen den hinlaufenden Verkehr gemessen wird, ein Signal zu generieren, welches das Aufnehmen und vorzugsweise auch das Speichern der Sequenz von Bildspalten für den Fall auslöst, dass die zweite Abstandsmessung einen Abstand zweier Fahrzeuge unterhalb eines Schwellwerts ergibt. Bei rücklaufendem Verkehr erlaubt die unabhängige zweite Abstandsmessung, bei Erkennung eines Abstands zweier Fahrzeuge unterhalb eines Schwellwerts, ein Signal zu generieren, welches das Speichern der zuletzt aufgezeichneten Sequenz von Bildspalten für den Fall auslöst. Der Abstand der zwei Fahrzeuge wird vorzugsweise als ein zeitlicher Abstand an einem bestimmten Ort gemessen.

Bei der zweiten Abstandsmessung wird vorzugsweise ein insbesondere zeitlicher Abstand zwischen einer Front des ersten Fahrzeugs und einer Front des zweiten Fahrzeugs bei hinlaufendem Verkehr, oder zwischen einem Heck des ersten Fahrzeugs und einem Heck des zweiten Fahrzeugs bei rücklaufendem Verkehr gemessen und im ersten Fall eine Länge des ersten Fahrzeugs, oder im zweiten Fall eine Länge des zweiten Fahrzeugs abgezogen, wobei die Länge des jeweiligen Fahrzeugs insbesondere in eine zeitliche Länge umgerechnet wird. Besonders bevorzugt wird die Länge des ersten Fahrzeugs oder die Länge des zweiten Fahrzeugs durch eine Auswertung der Sequenz von Bildspalten ermittelt, wobei die Sequenz das erste Fahrzeug oder das zweite Fahrzeug vollständig umfasst.

Gemäß einer weiteren bevorzugten Ausführungsform ist vorgesehen, dass eine Geschwindigkeit des ersten Fahrzeugs gemessen wird und dass eine Geschwindigkeit des zweiten Fahrzeugs gemessen wird. Besonders bevorzugt wird dazu eine Geschwindigkeitsmessvorrichtung, insbesondere ein LiDAR verwendet.

Gemäß einer weiteren bevorzugten Ausführungsform ist vorgesehen, dass eine Videoaufnahme der Fahrspur mit dem ersten Fahrzeug und dem zweiten Fahrzeug, sowie gegebenenfalls weiterer Fahrspuren, aufgezeichnet wird, wobei die Videoaufnahme mit der Sequenz von Bildspalten der Kamera synchronisiert wird.

Die Erfindung betrifft als weiteren, die Aufgabe lösenden Gegenstand eine Anordnung zur Bestimmung eines Abstands zwischen einem ersten, sich entlang einer Fahrspur bewegenden Fahrzeug und einem zweiten Fahrzeug, wobei das zweite Fahrzeug dem ersten Fahrzeug auf der Fahrspur folgt, umfassend mindestens
- einen lichtempfindlichen Sensor zum Aufnehmen einer Sequenz der Fahrspur mit mindestens einem Teil des ersten Fahrzeugs und einem Teils des zweiten Fahrzeugs und
- eine Zeitmessvorrichtung zur Synchronisierung der aufgenommenen Sequenz.

Erfindungsgemäß ist vorgesehen, dass eine Kamera als lichtempfindlicher Sensor Bildspalten aufzeichnet, wobei die Bildspalten die Sequenz bilden und die Zeitmessvorrichtung dazu vorgesehen ist, jeder Bildspalte der Sequenz eine Zeit zuzuordnen. Eine Auswertevorrichtung ist vorgesehen, um in der Sequenz von Bildspalten ein Heck des ersten Fahrzeugs und eine Front des zweiten Fahrzeugs zu identifizieren und eine Zeitdifferenz zwischen einer Position der Bildspalte mit dem Heck des ersten Fahrzeugs und einer Position der Bildspalte mit der Front des zweiten Fahrzeugs innerhalb der Sequenz anhand der zugeordneten Zeiten der Bildspalten der Sequenz zu ermitteln.

Die erfindungsgemäße Anordnung ist insbesondere zur Durchführung des zuvor beschriebenen, erfindungsgemäßen Verfahrens vorgesehen. Alle aus den Ausführungsformen des Verfahrens hervorgehenden körperlichen Merkmale sind auch als bevorzugte Ausgestaltungen der Anordnung zu verstehen.

Gemäß einer bevorzugten Ausführungsform der Anordnung ist eine Beleuchtungsvorrichtung vorgesehen. Für die Beleuchtung eignet sich sowohl sichtbares Licht, als auch Infrarotstrahlung.

Nachfolgend wird die Erfindung anhand eines Ausführungsbeispiels mit Bezug auf die beigefügte Zeichnung näher erläutert. Die Ausführungen beziehen sich gleichermaßen auf das erfindungsgemäße Verfahren und auf die entsprechende Anordnung. Sie sind lediglich beispielhaft und schränken den allgemeinen Erfindungsgedanken nicht ein.

Es zeigen
Figur 1 eine schematische Darstellung zur Durchführung des erfindungsgemäßen Verfahrens gemäß einer Ausführungsform bei hinlaufendem Verkehr;
Figur 2 eine schematische Darstellung zur Durchführung des erfindungsgemäßen Verfahrens gemäß einer Ausführungsform bei rücklaufendem Verkehr;
Figur 3 eine schematische Darstellung zur Durchführung des erfindungsgemäßen Verfahrens gemäß einer weiteren Ausführungsform;
Figur 4 eine Beispiel einer nach dem erfindungsgemäßen Verfahren aufgenommenen Sequenz von Bildspalten.

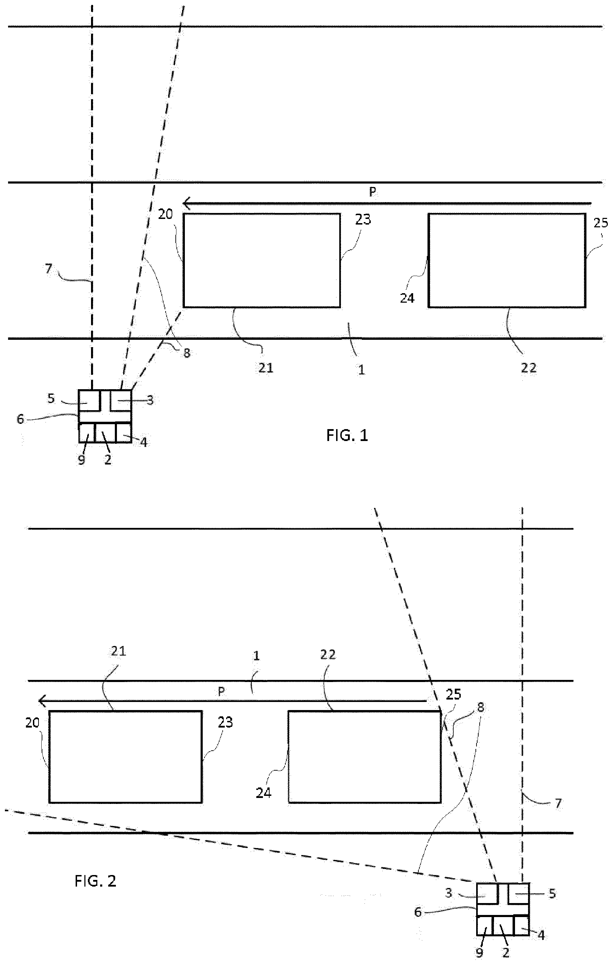

In den Figuren 1 bis 3 ist jeweils eine erfindungsgemäße Anordnung 6 zur Bestimmung eines Abstands wischen einem ersten, sich entlang einer Fahrspur 1 bewegenden Fahrzeug 21 und einem zweiten Fahrzeug 22, wobei das zweite Fahrzeug 22 dem ersten Fahrzeug 21 auf der Fahrspur 1 in Richtung eines die Fahrtrichtung der Fahrzeuge 21, 22 anzeigenden Pfeils P folgt. Erfindungsgemäß ist vorgesehen, dass eine Kamera 5 als lichtempfindlicher Sensorverwendet wird, um eine Sequenz von Bildspalten der Fahrspur 1 mit mindestens einem Teil des ersten Fahrzeugs 21 und einem Teils des zweiten Fahrzeugs 22 aufzunehmen. Mit einer Zeitmessvorrichtung 9 wird jedem Bild der Sequenz eine Zeit zugeordnet. Eine Auswertevorrichtung 2 ist vorgesehen, um in der Sequenz von Bildspalten ein Heck 23 des ersten Fahrzeugs 21 und eine Front 24 des zweiten Fahrzeugs 22 zu identifizieren. Nach dem Identifizieren des Hecks 23 als in Fahrtrichtung P hinterem Abschluss des ersten Fahrzeugs 21 und der Front 24 als in Fahrtrichtung P vorderem Ende des zweiten Fahrzeugs 22 wird diejenige Bildspalte ermittelt, die das Heck 23 zeigt und diejenige Bildspalte, die die Front 24 zeigt. Nachfolgend wird eine Zeitdifferenz zwischen einer Position der Bildspalte mit dem Heck 23 und einer Position der Bildspalte mit der Front 24 innerhalb der Sequenz ermittelt, welche einer Zeitdifferenz zwischen einer Erfassung des Hecks 23 des ersten Fahrzeugs 21 und einer Erfassung der Front 24 des zweiten Fahrzeugs 22 bei der Aufnahme der Sequenz von Bildspalten entspricht. Die Zeitdifferenz wird beispielsweise durch Bilden der Differenz der zugeordneten Zeiten der Bildspalte mit dem Heck 23 und der Bildspalte mit der Front 24 ermittelt. Alternativ kann auch die Anzahl der zwischen der Bildspalte mit dem Heck 23 und der Bildspalte mit der Front 24 aufgenommenen Bildspalten der Sequenz bestimmt werden. Die Zeitdifferenz lässt sich dann errechnen, indem die Anzahl durch die in der Regel bekannte Abtastrate der Kamera geteilt wird. Die erfindungsgemäße Anordnung ist zur Durchführung des erfindungsgemäßen Verfahrens vorgesehen, wobei alle, sich auf Ausführungsformen des Verfahrens beziehenden Merkmale auch als bevorzugte Ausgestaltungen der Anordnung zu verstehen sind, und umgekehrt.

Das erfindungsgemäße Verfahren zur Bestimmung eines Abstands zwischen dem ersten, sich entlang der Fahrspur 1 bewegenden Fahrzeug 21 und dem zweiten Fahrzeug 22, das dem ersten Fahrzeug 21 auf der Fahrspur 1 folgt, sieht somit vor, dass mit der Kamera 5 eine Sequenz von Bildspalten aufgenommen wird, wobei die Sequenz mindestens einen Teil des ersten Fahrzeugs 21 und einen Teil des zweiten Fahrzeugs 22 umfasst und wobei jedem Bild der Sequenz eine Zeit zugeordnet wird. Bevorzugt wird die Sequenz so aufgezeichnet, dass mindestens das zweite Fahrzeug 22 vollständig erfasst wird, besonders bevorzugt wird die Sequenz so aufgezeichnet, dass beide Fahrzeuge 21, 22 vollständig erfasst werden. Es wird, weiterhin erfindungsgemäß, eine Auswertung der Sequenz von Bildspalten vorgenommen, um das Heck 23 des ersten Fahrzeugs 21 und eine Front 24 des zweiten Fahrzeugs 22 zu identifizieren, sowie um eine Zeitdifferenz zwischen einer Position der Bildspalte mit dem Heck 23 des ersten Fahrzeugs 21 und einer Position der Bildspalte mit der Front 24 des zweiten Fahrzeugs 22 innerhalb der Sequenz anhand der den Bildspalten zugeordneten Zeiten zu ermitteln.

Nachfolgend wird auf die verschiedenen, in den Figuren 1 bis 3 dargestellten Ausführungsformen der erfindungsgemäßen Anordnung 6 näher eingegangen, die jeweils neben der Fahrbahn 1 angeordnet ist und in jedem Fall eine Kamera 5, vorzugsweise mit einer Beleuchtung (nicht dargestellt) aufweist, die den Abstand zwischen den zwei Fahrzeugen 21, 22, wie zuvor beschrieben, aufzeichnet. Bei den dargestellten Ausführungsformen ist jeweils eine Videokamera 4 vorgesehen, die beispielsweise eine Fahrbahnstrecke von 300 Meter Länge der Fahrbahn 1 und gegebenenfalls weiterer Fahrbahnen dokumentiert. Die Ausrichtung der Kamera 5 zur Fahrbahn 1 kann hierbei schräg oder senkrecht gewählt werden, in den Figuren 1 bis 3 ist jeweils eine senkrechte Ausrichtung der Kamera 5 zur Fahrbahn 1 vorgesehen und durch einen schematisch dargestellten Strahlengang 7 dargestellt. Weiterhin kann ein Geschwindigkeitsmessgerät 3, z. B. ein Radar oder LiDAR Messgerät eingesetzt werden, dessen Strahlengang, bzw. -sektor durch die Linien 8 schematisch angedeutet ist. Das Radar- bzw. LiDAR-Gerät 3 kann auch für eine zweite, unabhängige Abstandsmessung eingesetzt werden, die nachfolgend auch als sekundäre Abstandsmessung bezeichnet wird. Die Anordnung 6 kann als kompakte Anordnung mit nur einem Gehäuse vorgesehen sein. Stattdessen können alle Komponenten auch einzeln und räumlich im Rahmen der Funktionalität getrennt zum Einsatz kommen. Die Bildauswertung mittels Auswertevorrichtung 2 kann darüber hinaus zumindest teilweise, je nach Ausführungsform, auch zeitlich versetzt erfolgen.

Bei der in der Figur 1 dargestellten Ausführungsform der erfindungsgemäßen Anordnung 6 ist neben der Videokamera 4 zur Aufnahme des Streckenabschnitts von 300 Meter der Fahrbahn 1 und der Kamera 5 zur erfindungsgemäßen Abstandsmessung mittels der Zeitmessvorrichtung 9 und der Auswertevorrichtung 2, ein LiDAR Messgerät 3 zur Geschwindigkeits- und Abstandsmessung vorgesehen. Die sekundäre Abstandsmessung durch das LiDAR Messgerät 3 erfolgt dabei von einer Front 20 des ersten Fahrzeugs 21 zu der Front 24 des zweiten Fahrzeugs 22 als Variante für den hinlaufenden Verkehr. Bevorzugt wird dabei ein zeitlicher Abstand der Fahrzeuge 21, 22 an einem festgelegten Punkt der Fahrbahn 1 bestimmt. Ein Laser des LiDARs 3 dient dabei vorteilhaft als Trigger zur Erzeugung eines Signals für die Aufnahme, wenn das erste Fahrzeug 21 in den Laserbereich einfährt. Das bedeutet, nur wenn das Signal des Lasers 3 die Aufnahme triggert, nimmt die Kamera 5 für einen vorbestimmten Zeitraum von beispielsweise zwei Sekunden auf und die aufgezeichnete Sequenz von Bildspalten wird gespeichert. Zusätzlich wird die entsprechende Aufnahme der Videokamera 4 gestartet und anschließend gespeichert.

Bei der Abstandsmessung mit Hilfe des LiDARs 3 wird die zweite, unabhängige Abstandsmessung der Fahrzeuge 21, 22 bei hinlaufendem Verkehr von der Front 20 zu der Front 24 durchgeführt. Nachfolgend wird der Abstand zwischen dem Heck 23 des ersten Fahrzeugs 21 und der Front 24 des zweiten Fahrzeugs 22 ermittelt, indem die Fahrzeuglänge des ersten Fahrzeugs 21 von dem Messergebnis abgezogen wird. Bevorzugt wird eine zeitliche Länge des ersten Fahrzeugs 21 von dem zeitlich gemessenen Abstand der Fahrzeuge 21, 22 abgezogen. Die Länge des ersten Fahrzeugs 21 wird mittels einer Konturerkennung anhand der von der Kamera 5 aufgenommenen Sequenz von Bildspalten ermittelt, die mittels der Auswertevorrichtung 2 erfolgen kann. Die Konturerkennung ist in der Europäischen Patentanmeldung Nr. 14173551.4, auf die diese Anmeldung Bezug nimmt, beschrieben. Die zeitliche Länge des Fahrzeugs 21 ergibt sich aus den Zeiten, die denjenigen Bildspalten zugeordnet sind, die eine Seitenfläche des Fahrzeugs 21 zeigen.

Bei der in der Figur 2 dargestellten Ausführungsform der erfindungsgemäßen Anordnung 6 ist ebenfalls ein LiDAR Messgerät 3 zur Geschwindigkeits- und Abstandsmessung vorgesehen. Die sekundäre Abstandsmessung durch das LiDAR Messgerät 3 erfolgt dabei von Heck 22 zu Heck 25 der zwei Fahrzeuge 21, 22 als Variante für den abfließenden Verkehr. Die Kamera 4 nimmt dabei eine Dauerschleife von beispielsweise zehn Sekunden Dauer auf. Wird ein Verstoß, beispielsweise in Form eines zu geringen Abstands der Fahrzeuge 21, 22 durch den Laser 3 detektiert, findet eine Speicherung eines zeitlichen Ausschnittes von beispielsweise zwei Sekunden Dauer der aufgezeichneten Sequenz von Bildspalten der Kamera 5 und des entsprechenden Videomaterials der Videokamera 4 statt.

Bei rücklaufendem Verkehr wird die sekundäre Abstandsmessung von dem Heck 22 des ersten Fahrzeugs 21 zu einem Heck 25 des zweiten Fahrzeugs 22 durchgeführt. Nachfolgend wird der Abstand zwischen dem Heck 23 des ersten Fahrzeugs 21 und der Front 24 des zweiten Fahrzeugs 22 ermittelt, indem die Fahrzeuglänge des zweiten Fahrzeugs 22 von dem Messergebnis abgezogen wird. Die Länge des zweiten Fahrzeugs 22 wird mittels einer Konturerkennung anhand der von der Kamera 5 aufgenommenen Sequenz von Bildspalten ermittelt, die mittels der Auswertevorrichtung 2 erfolgen kann, wie zuvor mit Bezug auf Figur 1 beschrieben.

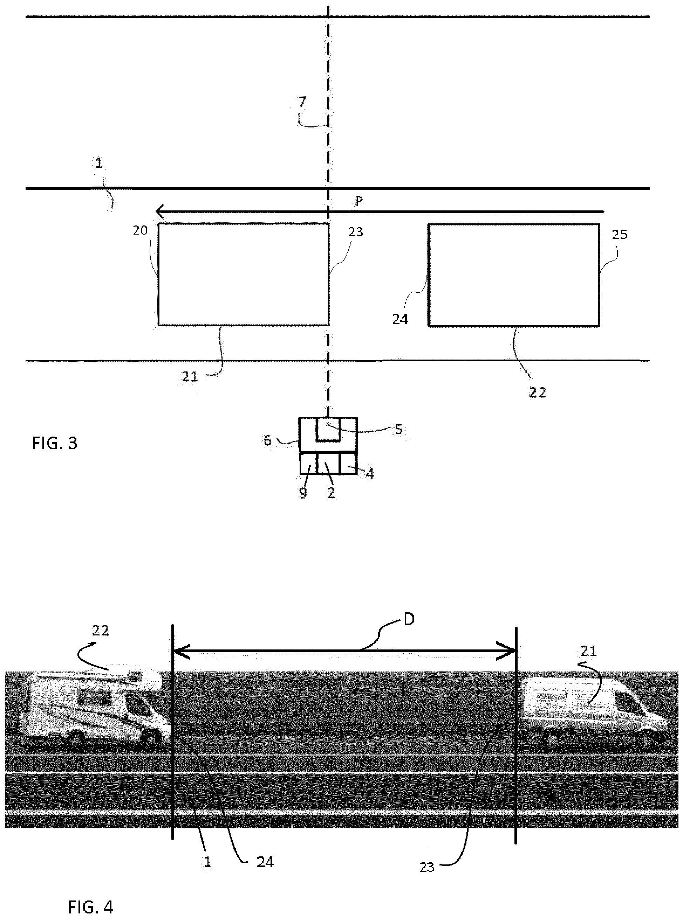

Bei der in der Figur 3 dargestellten Ausführungsform der erfindungsgemäßen Anordnung 6 sind nur die Videokamera 4 und die Kamera 5 vorgesehen, ohne ein Radar- oder Lasergerät zur sekundären Abstandsmessung. Die Aufnahme der Kameras 4, 5 erfolgt hierbei in einer Dauerschleife von beispielsweise zehn Sekunden Dauer. Wird ein Verstoß detektiert, findet eine Speicherung des jeweiligen zeitlichen Ausschnittes von beispielsweise zwei Sekunden Dauer der aufgezeichneten Sequenz von Bildspalten der Kamera 5 und der Aufzeichnung der Videokamera 4 statt.

In der Figur 4 ist ein Beispiel einer Sequenz von Bildspalten der Kamera 5 dargestellt, welche ein Abbild des ersten Fahrzeugs 21 und des zweiten Fahrzeugs 22 auf der Fahrspur 1 zeigt. Die automatische zeitlichen Abstandsmessung der zwei Fahrzeuge 21, 22 mit der Kamera 5 wird durch eine Auswertung der Sequenz durchgeführt, welche eine Konturerkennung der Fahrzeuge 21, 22 zur Fahrzeugsegmentierung, sowie eine Detektion des Hecks 23 des ersten Fahrzeugs 21 und der Front 24 des zweiten Fahrzeugs 22 umfasst. Weiterhin ist bevorzugt vorgesehen, eine Anzahl der zeitlich synchronisierten Bildspalten der Kamera 5, hier also der vertikalen Spalten in dem Abbild, zwischen dem Heck 23 des ersten Fahrzeugs 21 und der Front 24 des zweiten Fahrzeugs 22 zu bestimmen, die durch den Doppelpfeil D markiert sind. In dem dargestellten Abbild beträgt der Abstand 1365 Bildspalten, was bei einer beispielhaften Abtastrate der Kamera 5 von 3000 Hertz einem zeitlichen Abstand von 0,455 Sekunden entspricht.

### Bezugszeichenliste

- 1: Fahrspur
- 2: Auswertevorrichtung
- 3: Geschwindigkeits- und/oder Abstandsmessvorrichtung
- 4: Videokamera
- 5: Kamera
- 6: Anordnung zur Abstandsmessung
- 7: Schematischer Strahlengang der Kamera
- 8: Schematischer Strahlengang des LiDARs
- 9: Zeitmessvorrichtung
- 20: Front des ersten Fahrzeugs
- 21: Erstes Fahrzeug
- 22: Zweites Fahrzeug
- 23: Heck des ersten Fahrzeugs
- 24: Front des zweiten Fahrzeugs
- 25: Heck des zweiten Fahrzeugs
- P: Pfeil, Fahrtrichtung
- D: Doppelpfeil, Abstand

## Patentansprüche

1. Verfahren zur Bestimmung einer Zeitdifferenz zwischen einem ersten, sich entlang einer Fahrspur (1) bewegenden Fahrzeug (21) und einem zweiten Fahrzeug (22), wobei das zweite Fahrzeug dem ersten Fahrzeug auf der Fahrspur folgt,
wobei mit einem lichtempfindlichen Sensor (5) eine Sequenz aufgenommen wird,
wobei die Sequenz mindestens einen Teil des ersten Fahrzeugs und einen Teil des zweiten Fahrzeugs umfasst und
wobei die Aufnahme der Sequenz zeitlich synchronisiert wird,
**dadurch gekennzeichnet,**
**dass** eine Kamera (5) als lichtempfindlicher Sensor dazu verwendet wird, um zu jedem Zeitpunkt nur eine eindimensionale Bildspalte aufzunehmen,
wobei die Kamera (5) seitlich neben der Fahrspur (1) angeordnet wird,
wobei die eindimensionalen Bildspalten die Sequenz bilden und jeder eindimensionalen Bildspalte der Sequenz eine Zeit zugeordnet wird,
wobei eine Auswertung der Sequenz vorgenommen wird, um ein Heck (23) des ersten Fahrzeugs (21) und eine Front (24) des zweiten Fahrzeugs (22) zu identifizieren und
wobei eine Zeitdifferenz zwischen einer Position der eindimensionalen Bildspalte mit dem Heck des ersten Fahrzeugs und einer Position der eindimensionalen Bildspalte mit der Front des zweiten Fahrzeugs innerhalb der Sequenz anhand der zugeordneten Zeiten der eindimensionalen Bildspalten der Sequenz ermittelt wird.

2. Verfahren nach Anspruch 1, **dadurch gekennzeichnet, dass** bei einem Unterschreiten eines Schwellwerts für die Zeitdifferenz die aufgenommene Sequenz gespeichert wird.

3. Verfahren nach einem der vorhergehenden Ansprüche, **dadurch gekennzeichnet, dass** ein Aufnehmen der Sequenz von eindimensionalen Bildspalten durch ein Signal gestartet wird und nach Ablauf einer vorbestimmten Zeit beendet wird.

4. Verfahren nach einem der Ansprüche 1 oder 2, **dadurch gekennzeichnet, dass** die Sequenz von eindimensionalen Bildspalten als Aufnahmeschleife aufgezeichnet und nach Ablauf einer vorbestimmten Zeit überschrieben wird.

5. Verfahren nach einem der vorhergehenden Ansprüche, **dadurch gekennzeichnet, dass** die Kamera (5) etwa in einem rechten Winkel zu der Fahrspur (1) ausgerichtet wird.

6. Verfahren nach einem der vorhergehenden Ansprüche, **dadurch gekennzeichnet, dass** eine unabhängige zweite Abstandsmessung vorgenommen wird.

7. Verfahren nach Anspruch 6, **dadurch gekennzeichnet, dass** bei der zweiten Abstandsmessung ein Abstand zwischen einer Front (20) des ersten Fahrzeugs (21) und der Front (24) des zweiten Fahrzeugs (22) oder zwischen dem Heck (23) des ersten Fahrzeugs und einem Heck (25) des zweiten Fahrzeugs gemessen und eine Länge des ersten Fahrzeugs oder eine Länge des zweiten Fahrzeugs abgezogen wird.

8. Verfahren nach Anspruch 7, **dadurch gekennzeichnet, dass** die Länge des ersten Fahrzeugs (21) oder die Länge des zweiten Fahrzeugs (22) durch eine Auswertung der Sequenz von eindimensionalen Bildspalten ermittelt wird, wobei die Sequenz das erste Fahrzeug oder das zweite Fahrzeug vollständig umfasst.

9. Verfahren nach einem der vorhergehenden Ansprüche, **dadurch gekennzeichnet, dass** eine Geschwindigkeit des ersten Fahrzeugs (21) durch eine Geschwindigkeitsmessvorrichtung gemessen wird und dass eine Geschwindigkeit des zweiten Fahrzeugs (22) durch die Geschwindigkeitsmessvorrichtung gemessen wird.

10. Verfahren nach einem der vorhergehenden Ansprüche, **dadurch gekennzeichnet, dass** eine Videoaufnahme der Fahrspur (1) mit dem ersten Fahrzeug (21) und dem zweiten Fahrzeug (22) aufgezeichnet wird, wobei die Videoaufnahme mit der Sequenz von eindimensionalen Bildspalten der Kamera (5) synchronisiert wird.

11. Anordnung (6) zur Bestimmung einer Zeitdifferenz zwischen einem ersten, sich entlang einer Fahrspur (1) bewegenden Fahrzeug (21) und einem zweiten Fahrzeug (22), wobei das zweite Fahrzeug dem ersten Fahrzeug auf der Fahrspur folgt, umfassend
- einen lichtempfindlichen Sensor (5) zum Aufnehmen einer Sequenz von Bildern der Fahrspur mit mindestens einem Teil des ersten Fahrzeugs und einem Teils des zweiten Fahrzeugs und
- eine Zeitmessvorrichtung (9), um jedem Bild der Sequenz eine Zeit zuzuordnen,
**dadurch gekennzeichnet,**
**dass** eine Kamera (5) als lichtempfindlicher Sensor dazu vorgesehen ist, zu jedem Zeitpunkt nur eine eindimensionale Bildspalte aufzuzeichnen, wobei die Kamera (5) seitlich neben der Fahrspur (1) angeordnet ist, wobei die eindimensionalen Bildspalten die Sequenz bilden und die Zeitmessvorrichtung (9) dazu vorgesehen ist, jeder eindimensionalen Bildspalte der Sequenz eine Zeit zuzuordnen und wobei eine Auswertevorrichtung (2) vorgesehen ist, um in der Sequenz von eindimensionalen Bildspalten ein Heck (23) des ersten Fahrzeugs (21) und eine Front (24) des zweiten Fahrzeugs (22) zu identifizieren und eine Zeitdifferenz zwischen einer Position der eindimensionalen Bildspalte mit dem Heck des ersten Fahrzeugs und einer Position der eindimensionalen Bildspalte mit der Front des zweiten Fahrzeugs innerhalb der Sequenz anhand der zugeordneten Zeiten der eindimensionalen Bildspalten der Sequenz zu ermitteln.

## Claims

1. Method for determining a time difference between a first vehicle (21), moving along a lane (1), and a second vehicle (22), wherein the second vehicle follows the first vehicle in the lane,
wherein a light sensitive sensor (5) records a sequence,
wherein the sequence comprises at least a portion of the first vehicle and a portion of the second vehicle and
wherein the recording of the sequence is synchronised concerning the time,
**characterised in**
**that** a camera (5) is used as the light sensitive sensor, to record only one one-dimensional image column at each particular time,
wherein the camera (5) is arranged laterally next to the lane (1),
wherein the one-dimensional image columns form the sequence and each one-dimensional image column of the sequence is assigned to a time,
wherein an evaluation of the sequence is carried out, to identify a rear (23) of the first vehicle (21) and a front (24) of the second vehicle (22), and
wherein a time difference between a position of the one-dimensional image column comprising the rear of the first vehicle and a position of the one-dimensional image column comprising the front of the second vehicle within the sequence is determined by means of the assigned times of the one-dimensional image columns of the sequence.

2. Method according to claim 1, **characterised in that** if the determined time difference of a sequence is below a threshold, the recorded sequence is stored.

3. Method according to one of the preceding claims, **characterised in that** a recording of the sequence of one-dimensional image columns is started by a signal and stopped after a predetermined time has passed.

4. Method according to one of claims 1 or 2, **characterised in that** the sequence of one-dimensional image columns is recorded as a recording loop wherein the sequence is overwritten after a predetermined time has passed.

5. Method according to one of the preceding claims, **characterised in that** the camera (5) is aligned approximately at a right angle to the lane (1).

6. Method according to one of the preceding claims, **characterised in that** an independent second distance measuring is carried out.

7. Method according to claim 6, **characterised in** hat in the second distance measuring a distance between a front (20) of the first vehicle (21) and the front (24) of the second vehicle (22) or between the rear (23) of the first vehicle and a rear (25) of the second vehicle is measured and that a length of the first vehicle or a length of the second vehicle is deducted.

8. Method according to claim 7, **characterised in** hat the length of the first vehicle (21) or the length of the second vehicle (22) is determined by an evaluation of the sequence of one-dimensional image columns, wherein one of the first vehicle or the second vehicle is recorded in the sequence entirely.

9. Method according to one of the preceding claims, **characterised in that** a velocity of the first vehicle (21) is measured using a speed measuring device and that a velocity of the second vehicle (22) is measured using the speed measuring device.

10. Method according to one of the preceding claims, **characterised in that** a video recording of the lane (1) with the first vehicle (21) and the second vehicle (22) is made, wherein the video recording is synchronised with the sequence of one-dimensional image columns of the camera (5).

11. Arrangement (6) for determining a time distance between a first vehicle (21), moving along a lane (1), and a second vehicle (22), wherein the second vehicle follows the first vehicle in the lane, comprising
- a light sensitive sensor (5) for recording a sequence of images of the lane with at least one portion of the first vehicle and one portion of the second vehicle and
- a time measuring device (9) for assigning a time index to each image of the sequence,
**characterised in**
**that** a camera (5) is provided as the light sensitive sensor to record one one-dimensional image column at each particular time, wherein the camera (5) is arranged laterally next to the lane (1), wherein the one-dimensional image columns form the sequence and the time measuring device (9) is provided to assign a time index to each one-dimensional image column of the sequence; and wherein an evaluation device (2) is provided, to identify a rear (23) of the first vehicle (21) and a front (24) of the second vehicle (22) in the sequence of one-dimensional image columns and to determine a time difference between a position of the one-dimensional image column with the rear of the first vehicle and a position of the one-dimensional image column with the front of the second vehicle within the sequence by means of the assigned times of the one-dimensional image columns of the sequence.

## Revendications

1. Procédé, destiné à déterminer un décalage horaire entre un premier véhicule (21) se déplaçant le long d'une trajectoire (1) et un deuxième véhicule (22), le deuxième véhicule suivant le premier véhicule sur la trajectoire,
à l'aide d'un capteur (5) photosensible, une séquence étant enregistrée,
la séquence comprenant au moins une partie du premier véhicule et une partie du deuxième véhicule et
l'enregistrement de la séquence étant synchronisé dans le temps,
**caractérisé en ce**
**qu'**une caméra (5) est utilisée en tant que capteur photosensible, pour n'enregistrer à chaque instant qu'une colonne d'image unidimensionnelle,
la caméra (5) étant placée latéralement à côté de la trajectoire (1),
les colonnes d'image unidimensionnelles formant la séquence et à chaque colonne d'image unidimensionnelle de la séquence étant affecté un temps,
une évaluation de la séquence étant réalisée, pour identifier une partie arrière (23) du premier véhicule (21) et une partie frontale (24) du deuxième véhicule (22) et
un décalage horaire entre une position de la colonne d'image unidimensionnelle avec l'arrière du premier véhicule et une position de la colonne d'image unidimensionnelle avec la partie frontale du deuxième véhicule à l'intérieur de la séquence étant déterminé à l'aide des temps affectés des colonnes d'image unidimensionnelles de la séquence.

2. Procédé selon la revendication 1, **caractérisé en ce que**, lors d'une non-atteinte d'une valeur seuil pour le décalage horaire, la séquence enregistrée est mémorisée.

3. Procédé selon l'une quelconque des revendications précédentes, **caractérisé en ce qu'**un enregistrement de la séquence de colonnes d'image unidimensionnelles est lancé par un signal et s'achève après l'écoulement d'un temps prédéterminé.

4. Procédé selon l'une quelconque des revendications 1 ou 2, **caractérisé en ce que** la séquence de colonnes d'image unidimensionnelles est consignée en tant que boucle d'enregistrement et est écrasée après l'écoulement d'un temps prédéfini.

5. Procédé selon l'une quelconque des revendications précédentes, **caractérisé en ce que** la caméra (5) est orientée approximativement sous un angle droit par rapport à la trajectoire (1).

6. Procédé selon l'une quelconque des revendications précédentes, **caractérisé en ce qu'**une deuxième mesure de la distance est réalisée.

7. Procédé selon la revendication 6, **caractérisé en ce que** lors de la deuxième mesure de la distance, une distance entre une partie frontale (20) du premier véhicule (21) et la partie frontale (24) du deuxième véhicule (22) ou entre la partie arrière (23) du premier véhicule et une partie arrière (25) du deuxième véhicule est mesurée et une longueur du premier véhicule ou une longueur du deuxième véhicule est soustraite.

8. Procédé selon la revendication 7, **caractérisé en ce que** la longueur du premier véhicule (21) ou la longueur du deuxième véhicule (22) est déterminée par une évaluation de la séquence de colonnes d'image unidimensionnelles, la séquence comprenant entièrement le premier véhicule ou le deuxième véhicule.

9. Procédé selon l'une quelconque des revendications précédentes, **caractérisé en ce qu'**une vitesse du premier véhicule (21) est mesurée par un dispositif de mesure tachymétrique et **en ce qu'**une vitesse du deuxième véhicule (22) est mesurée par le dispositif de mesure tachymétrique.

10. Procédé selon l'une quelconque des revendications précédentes, **caractérisé en ce qu'**un enregistrement vidéo de la trajectoire (1) avec le premier véhicule (21) et avec le deuxième véhicule (22) est consigné, l'enregistrement vidéo étant synchronisé avec la séquence de colonnes d'image unidimensionnelles de la caméra (5).

11. Agencement (6), destiné à déterminer un décalage horaire entre un premier véhicule (21) se déplaçant le long d'une trajectoire (1) et un deuxième véhicule (22), le deuxième véhicule suivant le premier véhicule sur la trajectoire, comprenant
- un capteur (5) photosensible, destiné à enregistrer une séquence d'images de la trajectoire avec au moins une partie du premier véhicule et une partie du deuxième véhicule et
- un dispositif de mesure du temps (9), pour affecter un temps à chaque image de la séquence,
**caractérisé en ce**
**qu'**il est prévu une caméra (5) en tant que capteur photosensible, pour ne consigner à chaque instant qu'une colonne d'image unidimensionnelle, la caméra (5) étant placée latéralement à côté de la trajectoire (1), les colonnes d'image unidimensionnelles formant la séquence et le dispositif de mesure du temps (9) étant prévu pour affecter un temps à chaque colonne d'image unidimensionnelle de la séquence et un dispositif d'évaluation (2) étant prévu, pour identifier dans la séquence de colonnes d'image unidimensionnelles une partie arrière (23) du premier véhicule (21) et une partie frontale (24) du deuxième véhicule (22) et pour déterminer un décalage horaire entre une position de la colonne d'image unidimensionnelles avec l'arrière du premier véhicule et une position de la colonne d'image unidimensionnelle avec la partie frontale du deuxième véhicule à l'intérieur de la séquence à l'aide des temps affectés des colonnes d'image unidimensionnelles de la séquence.
